# EUROPÄISCHE PATENTSCHRIFT

(11) **EP 3 319 821 B1**
(45) Veröffentlichungstag und Bekanntmachung des Hinweises auf die Patenterteilung: **03.04.2019**
(21) Anmeldenummer: 16726608.9
(22) Anmeldetag: 03.06.2016
(51) Int. Cl.: B60G 3/20, B60G 11/08, B60G 11/10, B60G 13/00, B60G 3/26

(54) **DOPPELQUERLENKERACHSE**
DOUBLE-WISHBONE AXLE
ESSIEU À BRAS TRANSVERSAUX SUPERPOSÉS

(30) Priorität: 10.07.2015 DE 102015212983
(43) Veröffentlichungstag der Anmeldung: 16.05.2018
(73) Patentinhaber: Bayerische Motoren Werke Aktiengesellschaft, 80809 München (DE)
(72) Erfinder: DURKOVIC, Martin, 81929 München (DE)
(86) Internationale Anmeldenummer: PCT/EP2016/062641
(87) Internationale Veröffentlichungsnummer: WO 2017/008952

(56) Entgegenhaltungen:
- WO-A1-2016/078842
- DE-A1- 3 219 685
- DE-A1- 3 735 544
- DE-A1- 4 343 525
- DE-A1-102010 061 018
- JP-A- H02 155 813
- US-A- 3 193 304
- US-A- 5 348 337
- US-A- 5 435 591

## Beschreibung

Vorliegende Erfindung betrifft eine Doppelquerlenkerachse für ein Fahrzeug gemäß dem Obergriff des Anspruchs 1.

Eine Doppelquerlenkerachse gemäß dem Oberbegriff zeigt beispielsweise die DE 37 35 544 A1; weiteren Stand der Technik bilden die DE 43 43 525 A1 und die DE 32 19 685 A1 sowie die gegenüber dem Prioritätstag der vorliegenden Anmeldung nicht vorveröffentlichte WO 2016/078842 A1. Beispielsweise die letztgenannte Schrift zeigt eine Querblattfeder als Federelement, ebenso wie die DE 10 2010 061 018 A1.

Es ist Aufgabe vorliegender Erfindung, eine Doppelquerlenkerachse anzugeben, die bei geringem Bauraumbedarf einen sicheren Betrieb eines Fahrzeugs und möglichst viel gestalterischen Freiraum zur Auslegung der Fahrdynamik ermöglicht. Die Lösung der vorstehend genannten Aufgabe erfolgt durch die Merkmale des Anspruchs 1. Die Unteransprüche haben vorteilhafte Ausgestaltungen der Erfindung zum Gegenstand.

Somit wird die Aufgabe gelöst durch eine Doppelquerlenkerachse. Die Doppelquerlenkerachse wird insbesondere bei einem zweispurigen Straßenfahrzeug verwendet. Die Doppelquerlenkerachse umfasst einen Radträger. An diesem Radträger ist ein Rad des Fahrzeugs drehbar gelagert. Mittels eines oberen Querlenkers und eines unteren Querlenkers erfolgt eine geringfügig gelenkige Anbindung des Radträgers am Aufbau des Fahrzeuges. Der Begriff Fahrzeug-Aufbau ist hier breit zu verstehen und umfasst auch etwaige Hilfsrahmen, Fahrschemel oder Achsträger.

Des Weiteren ist ein Dämpfer vorgesehen. Der Dämpfer umfasst üblicherweise einen Zylinder, in welchem ein mit einer Kolbenstange versehener Kolben geführt ist. Der Dämpfer ist zur Dämpfung der Ein- und Ausfederbewegung des Rades (gegenüber der Karosserie) angeordnet. Üblicherweise ist die Kolbenstange mit ihrem dem Kolben abgewandten Ende am Fahrzeug-Aufbau befestigt - in verallgemeinerter Form besitzt der Dämpfer einen fahrzeugaufbauseitig abgestützten ersten Bestandteil, wobei diese Abstützung über irgendein geeignetes Stützlager direkt sein kann oder auch indirekt über ein weiteres zwischengeschaltetes Bauelement. Üblicherweise ist der Dämpfer-Zylinder am Radträger befestigt, bzw. in verallgemeinerter Form besitzt der Dämpfer einen radträgerseitig abgestützten zweiten Bestandteil, wobei diese Abstützung abermals direkt ausgeführt sein kann oder auch indirekt über ein weiteres zwischengeschaltetes Bauelement, so insbesondere über einen radführenden Lenker verlaufen kann.

Die Doppelquerlenkerachse umfasst des Weiteren ein Federelement, über welches der Fahrzeug-Aufbau anteilig am Radträger abgestützt ist. Das Federelement ist als Querblattfeder ausgebildet und ausschließlich über den am Radträger abgestützten Bestandteil des Dämpfers am Radträger abgestützt, so dass hinsichtlich der Kraftübertragung zwischen dem Fahrzeugaufbau und dem Radträger eine Reihenschaltung mit zwischengeschaltetem Federelement und dem radträgerseitig abgestützten Dämpfer-Bestandteil gebildet ist. Eine solche Anordnung zeichnet sich durch höchste Kompaktheit, d.h. minimalen Bauraumbedarf aus.

Weiterhin umfasst der Dämpfer bzw. das Dämpferrohr in seinem unteren Endabschnitt eine Verlängerung. Die Verlängerung bildet dabei das untere Ende des Dämpfers und ist gabelförmig. Aufgrund der Gabelform kann zwischen den beiden Zinken der "Gabel" eine Antriebswelle zum am Radträger gelagerten Rad geführt sein. Vorzugsweise liegt dabei das untere Ende des Dämpfers, nämlich der Verbindungspunkt zwischen dem Dämpfer und dem Federelement, unterhalb der Raddrehachse.

Durch die relativ niedrige Anordnung des unteren Endes des Dämpfers entsteht eine relativ lange, durch den Dämpfer gebildete virtuelle Pendelstütze. Dadurch verkleinert sich die Kraftinteraktion zwischen dem oberen Querlenker und dem Federelement. Indem der Dämpfer nicht mit dem unteren Querlenker verbunden ist, sind im Übrigen nahezu beliebige (jeweils geeignete) Ausführungsvarianten des unteren Querlenkers möglich, so bspw. als eingelenkiger oder als zweigelenkiger Lenker. Als weiterer Vorteil der Erfindung ist herauszustellen, dass hierbei der obere Querlenker relativ steif im Vergleich zum unteren Querlenker gelagert werden kann. Dies reduziert die Sensibilität der Doppelquerlenkerachse auf die Kraftinteraktion, da die Längs- und Querfederrate meistens durch den von dem Federelement entkoppelten unteren Querlenker eingestellt wird.

Vorzugsweise ist der radträgerseitig abgestützte Bestandteil des Dämpfers direkt oder unter Zwischenschaltung eines weiteren Bauelements indirekt in Fahrzeug-Hochachsrichtung betrachtet an einem oberen Abschnitt des Radträgers abgestützt, während die Abstützung des Federelements am radträgerseitig abgestützten Dämpfer-Bestandteil nahe des unteren Querlenkers vorgesehen ist. Ansonsten erfolgt keine weitere Anbindung des unteren Endabschnittes des Dämpfers. Insbesondere ist der Dämpfer bei dieser Ausführungsform nicht mit einem unteren Querlenker und nicht mit einem unteren Abschnitt des Radträgers verbunden. Das Federelement ermöglicht somit eine vertikale, gefederte Bewegung des Dämpfers, wobei das besagte Federelement gleichzeitig die Tragfeder des Fahrzeugs bzw. Fahrzeug-Aufbaus darstellt.

Für die Verbindung des radträgerseitig abgestützten Dämpfer-Bestandteils mit dem oberen Querlenker oder dem Radträger gibt es zwei bevorzugte Varianten:
Gemäß einer ersten Variante ist vorgesehen, dass der Dämpfer-Bestanteil bzw. der Dämpferzylinder praktisch direkt mit dem oberen Querlenker verbunden ist. Der obere Querlenker wiederum ist entweder direkt oder unter Zwischenschaltung eines Drehgelenks oder dgl., welches insbesondere für eine Fzg.-Vorderachsachse mit lenkbaren Rädern benötigt wird, mit dem Radträger verbunden. Eine solche lenkbare Verbindung zwischen oberem Querlenker und Radträger erfolgt bspw. über ein Kugelgelenk. Auch die Verbindung zwischen dem besagten Dämpfer-Bestandteil und dem oberem Querlenker ist geringfügig gelenkig bzw. um eine zumindest näherungsweise in Fzg.-Längsrichtung verlaufende Achse verschwenkbar ausgeführt, um ein Ein- und Ausfedern des Radträgers gegenüber dem Fahrzeug-Aufbau verspannungsfrei zu ermöglichen.

Gemäß einer zweiten Variante ist vorgesehen, dass der radträgerseitig abgestützte Dämpfer-Bestandteil bzw. der Dämpferzylinder unter Zwischenschaltung eines geeigneten Gelenks praktisch direkt mit dem oberen Bereich des Radträgers verbunden ist, wobei der obere Querlenker nicht mit dem Radträger, sondern mit diesem Dämpfer-Bestandteil verbunden ist. Mit dieser Anordnung ist tatsächlich eine Feder- und Dämpferübersetzung mit dem Verhältnis "1" darstellbar. Auch hier können zur gelenkigen Verbindung bewegliche Elemente wie Kugelgelenke, Gummilager oder Hydrolager eingesetzt sein.

In beiden vorstehend beschriebenen Varianten dient der Dämpferzylinder bzw. das radträgerseitig abgestützte Dämpfer-Bestandteil als Pendelstütze zwischen dem oberen Querlenker bzw. dem oberen Bereich des Radträgers und dem relativ weit unten angeordneten Federelement.

Zurückkommend auf die Abstützung des fahrzeugaufbauseitig abgestützten Dämpfer-Bestandteils bzw. der Dämpfer-Kolbenstange ist dieser bzw. diese mittels eines Stützlagers am Fzg.-Aufbau befestigt. Das Stützlager ermöglicht dabei eine Bewegung des Dämpfers in Fahrzeugquerrichtung und eine relativ kleine Bewegung auch in Fahrzeuglängsrichtung. Besonders bevorzugt ist vorgesehen, dass das Stützlager mehrere Gummischichten umfasst. Zwischen den einzelnen Gummischichten befinden sich steife Zwischenschichten, bspw. aus Metall oder einem harten Kunststoff. Die Zwischenschichten trennen dabei die Gummischichten voneinander. Die Gummischichten und die Zwischenschichten sind mit einer max. Abweichung von 20° senkrecht zur Dämpferachse (= Achse der Dämpfer-Kolbenstange) angeordnet. Dadurch ermöglicht das Stützlager eine gewisse Bewegung in Fahrzeugquerrichtung.

Als Federelement wird eine Querblattfeder eingesetzt, d.h. ein Blattfederelement, das sich mit seiner Längsrichtung in Fzg.-Querrichtung erstreckt. Insbesondere wird dabei für eine linke und eine rechte Radaufhängung des Fahrzeugs eine gemeinsame Querblattfeder eingesetzt. Die Querblattfeder ist vorteilhafterweise über zumindest ein Federlager an der Karosserie bzw. am Aufbau des Fahrzeugs befestigt. Das freie Ende der Querblattfeder ist vorzugsweise um eine zumindest annähernd in Fzg.-Längsrichtung verlaufende Achse verschwenkbar mit dem in Fzg.-Hochachsrichtung betrachtet unteren Endbereich des Dämpfers verbunden. Diese Verbindung erfolgt vorzugsweise durch ein Gummilager oder Kugelgelenk.

Eine dem Fachmann bekannte Zusatzfeder, welche praktisch einen Druck- und/oder Zuganschlag für den Dämpfer bzw. für die maximale Ein- und Ausfederbewegung des Fahrzeug-Aufbaus gegenüber dem Radträger darstellt, muss bei einer erfindungsgemäßen Doppelquerlenkerachse nicht im Dämpfer integriert sein sondern kann separat angeordnet sein. Beispielsweise kann eine solche Zusatzfeder an einer geeigneten Stelle zwischen dem oberen Querlenker und dem Fahrzeug-Aufbau positioniert sein, wodurch die Belastung des Dämpfers und damit auch des Stützlagers des Dämpfers (bzw. des fahrzeugaufbauseitig abgestützten Dämpfer-Bestandteils) verringert wird.

Weitere Einzelheiten, Merkmale und Vorteile der Erfindung ergeben sich aus der nachfolgenden Beschreibung und den Figuren. Es zeigen:
- Figur 1: eine Ansicht in Fahrzeug-Längsrichtung einer erfindungsgemäßen Doppelquerlenkerachse gemäß einem ersten Ausführungsbeispiel,
- Figur 2: eine isometrische Ansicht der Doppelquerlenkerachse gemäß dem ersten Ausführungsbeispiel, und
- Figur 3: eine erfindungsgemäße Doppelquerlenkerachse gemäß einem zweiten Ausführungsbeispiel in einer Ansicht wie Fig.1.

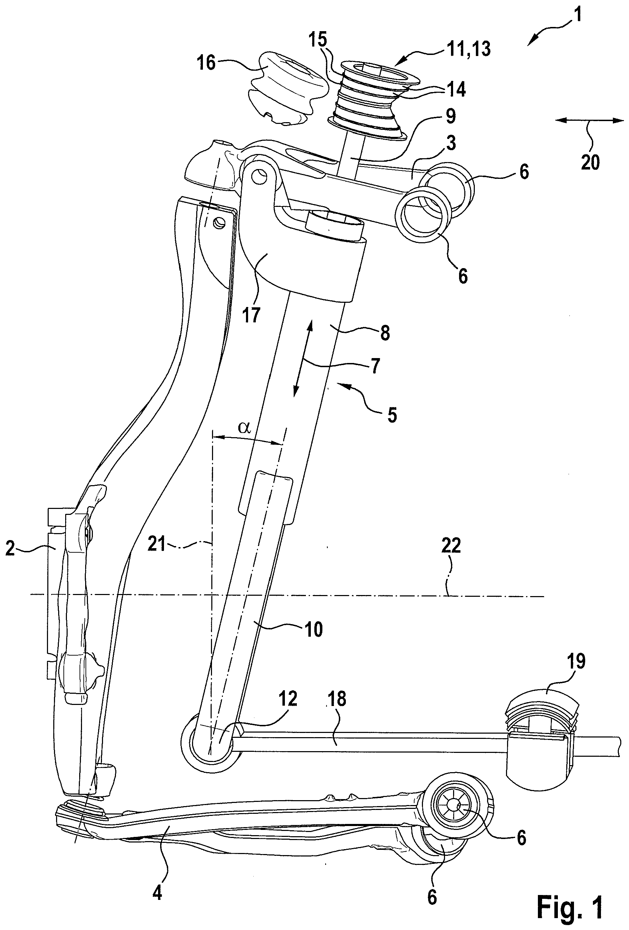

Im Folgenden werden anhand der Figuren 1 bis 3 zwei Ausführungsbeispiele einer Doppelquerlenkerachse 1 für ein zweispuriges Straßenfahrzeug beschrieben. Gleiche bzw. funktional gleiche Bauteile sind in beiden Ausführungsbeispielen mit denselben Bezugszeichen versehen.

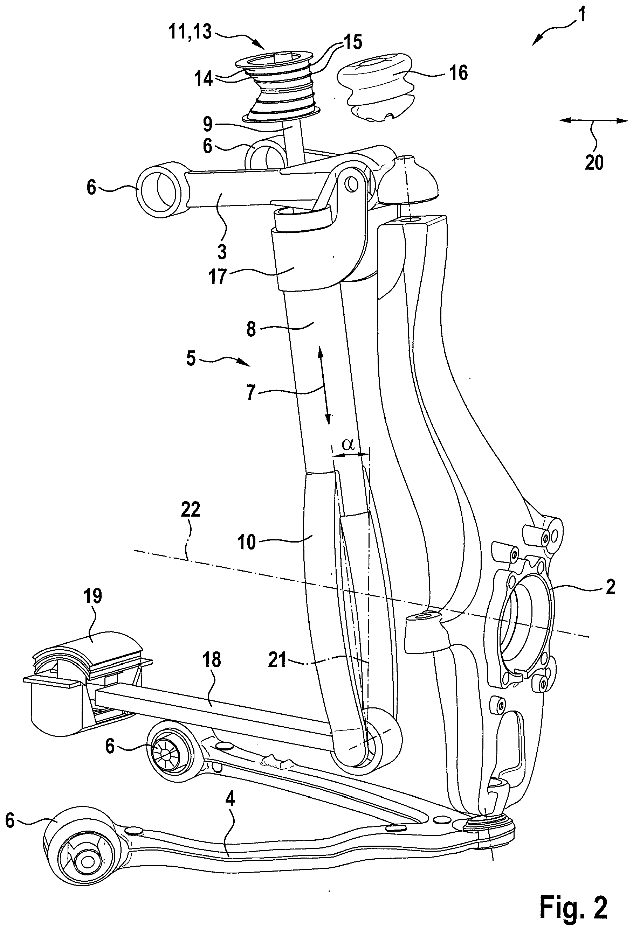

Gemäß den Figuren 1 und 2 umfasst die Doppelquerlenkerachse 1 einen Radträger 2. Der Radträger 2 kann auch als Schwenklager bezeichnet werden. Am Radträger 2 wird ein Rad drehbar montiert. Die Figuren zeigen eine Raddrehachse 22 dieses Rades.

Über einen (in Fzg.-Hochachsrichtung betrachtet) oberen Querlenker 3 und einen (in Fzg.-Hochachsrichtung betrachtet) unteren Querlenker 4 erfolgt die gelenkige Anbindung des Radträgers 2 an die Karosserie des Fahrzeugs, d.h. an dessen Aufbau. Der Fzg.-Aufbau bzw. die Karosserie ist nicht dargestellt. Allerdings zeigen Karosserieanbindungspunkte 6 der beiden Querlenker 3, 4, an welchen Positionen die Anbindung zur Karosserie bzw. zum Fzg.-Aufbau erfolgt. Die Verbindung zwischen den Querlenkern 3, 4 und dem Radträger 2 ist rein schematisch durch gestrichelte Linien dargestellt. Der Einfachheit halber sind die an diesen Verbindungsstellen wie üblich vorgesehenen Gelenke nicht figürlich dargestellt.

Die Doppelquerlenkerachse 1 umfasst des Weiteren einen Dämpfer 5. Der Dämpfer 5 erstreckt sich entlang einer Dämpferachse 7. Der Dämpfer 5 umfasst einen Dämpferzylinder 8. In dem Dämpferzylinder 8 ist über eine Kolbenstange 9 ein nicht dargestellter Kolben verlagerbar geführt. Die Kolbenstange 9 und der Dämpferzylinder 8 erstrecken sich entlang der Dämpferachse 7. Am Dämpferzylinder 8 ist an dessen unten liegendem Ende eine gabelförmige Verlängerung 10 vorgesehen. Das untere Ende der Verlängerung 10 bildet ein unteres Ende 12 des gesamten Dämpfers 5. Die Kolbenstange 9 des Dämpfers 5 ist mit ihrem dem Dämpferzylinder 8 abgewandten Ende in einem Stützlager 13 am Fzg.-Aufbau abgestützt; daher wird die Kolbenstange 9 auch als fahrzeugaufbauseitig abgestützter Bestandteil 9 des Dämpfers 5 bezeichnet. Hingegen ist der Dämpferzylinder 8 am Radträger 2 abgestützt und ist daher auch als radträgerseitig abgestützter Bestandteil 8 des Dämpfers 5 bezeichnet.

Beim Ausführungsbeispiel nach den Figuren 1, 2 ist der Dämpferzylinder ist über einen Arm 17 gelenkig mit dem oberen Querlenker 3 verbunden. Dabei ist der Arm 17 am Dämpferzylinder 8 steif angebracht, während die gelenkige Verbindung des Arms 17 mit dem oberen Querlenker 3 ein zumindest geringfügiges Verschwenken des Querlenkers 3 gegenüber dem Arm 17 um eine im wesentlichen in Fzg.-Längsrichtung (diese steht im wesentlichen senkrecht auf der Zeichenebene) verlaufende Achse erlaubt.

Das untere Ende 12 des Dämpfers 5 ist ebenso gelenkig mit einem Federelement 18 verbunden. Im gezeigten Ausführungsbeispiel ist das Federelement 18 eine Querblattfeder. Die Querblattfeder ist mit zumindest einem Federlager 19 am Fahrzeug-Aufbau befestigt, so dass sicher dieser über das als Tragfeder fungierende Federelement 18 anteilig auf dem Radträger 2 (und damit auch auf dem an diesem gelagerten Fzg.-Rad) abstützt. Da sich die vorliegend verwendete Querblattfeder vorzugsweise über die gesamte Fahrzeug-Breite erstreckt, ist der Fzg.-Aufbau an der durch beide Räder gebildeten Achse anteilig abgestützt.

Der Dämpfer 5 ist weder mit dem unteren Bereich des Radträgers 2 noch mit dem unteren Querlenker 4 verbunden. Der Dämpfer 5 ist zusammen mit dem Radträger 2 in Vertikalrichtung 21 beweglich. Der Dämpfer ist annähernd vertikal angeordnet. Der Winkel α zwischen der Dämpferachse 7 und der Fahrzeughochrichtung 21 kann sich jedoch bis ca. 45° erstrecken.

Das vorstehend genannte Stützlager 13 für die Kolbenstange 9 gegenüber dem Fzg.-Aufbau umfasst mehrere Gummischichten 14. Diese Gummischichten 14 sind mittels Zwischenschichten 15 voneinander getrennt. Dieser schichtweise Aufbau des Stützlagers 13 ermöglicht eine geringe Beweglichkeit der Kolbenstange 9 insbesondere in Fahrzeugquerrichtung 20.

Figur 2 zeigt eine andere Perspektive der Doppelquerlenkerachse 1 aus Fig.1. Anhand Figur 2 ist gut zu sehen, dass die Verlängerung 10 gabelförmig ist. Dadurch kann zwischen den zwei Zinken dieser Gabelform ein Antriebsstrang praktisch koaxial zur Raddrehachse 22 geführt sein.

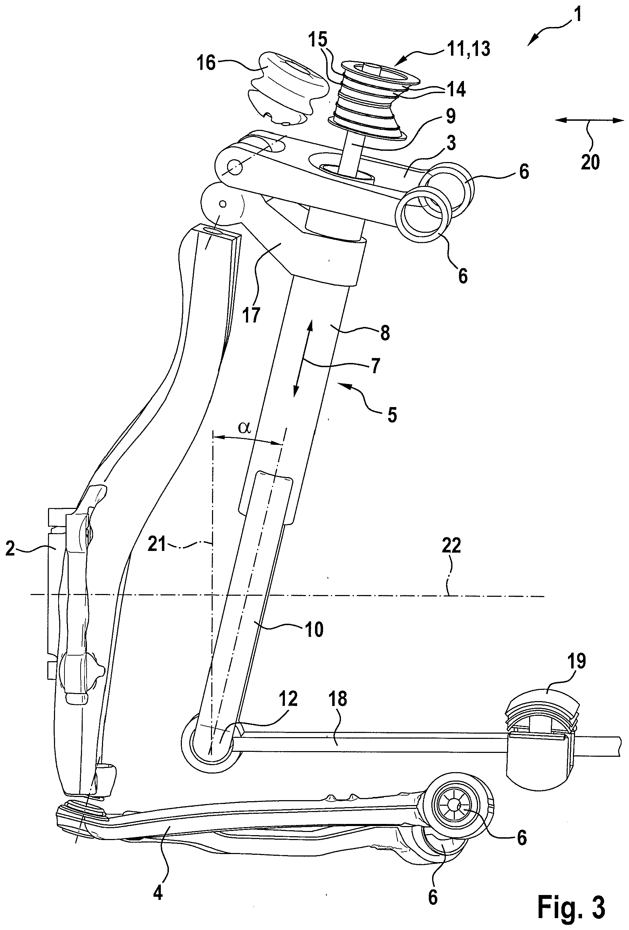

Figur 3 zeigt das zweite Ausführungsbeispiel. Im zweiten Ausführungsbeispiel ist das Dämpferrohr 8 über den Arm 17 direkt mit dem oberen Bereich des Radträgers 2 gelenkig verbunden und vorzugsweise derart gelenkig verbunden, dass der Radträger 2 um eine annähernd vertikal verlaufende Lenkdrehachse verschwenkt und damit das von ihm getragene Rad gelenkt werden kann - vergleichbares gilt selbstverständlich für das Ausführungsbeispiel nach Figur 1, 2, wobei jedoch ausdrücklich darauf hingewiesen sei, dass das vorgeschlagene erfindungsgemäße Anbindungsprinzip einer Tragfeder an einem Radträger unter serieller Zwischenschaltung eines Dämpfers auch an beliebigen nicht gelenkten Achsen angewandt werden kann, welche einen oberen und einen unteren Querlenker zur Führung des Radträgers aufweisen.

Zurückkommend auf Fig.3 ist bei diesem Ausführungsbeispiel der obere Querlenker 3 somit nicht direkt mit dem Radträger 2 verbunden, sondern unter Zwischenschaltung des Armes 17, welcher starr mit dem Dämpfer 5 verbunden ist. Vorgesehen ist hier also eine direkte Verbindung des Dämpferrohrs 8 mit dem oberen Querlenker 3, und zwar über den Arm 17. Die Anordnung gemäß dem zweiten Ausführungsbeispiel ermöglicht eine vorteilhafte Feder- und Dämpferübersetzung von ca. "1".

In beiden Ausführungsbeispielen ist rein schematisch eine Zusatzfeder 16 eingezeichnet. Diese Darstellung soll verdeutlichen, dass erfindungsgemäß die Zusatzfeder 16 nicht mehr auf der Dämpferachse 7 liegen muss. Vielmehr kann die Zusatzfeder 17 auch außerhalb des Dämpfers 5, bspw. zwischen dem oberen Querlenker 3 und der Karosserie angeordnet werden.

Auch in Figur 3 sind bspw. die Verbindungen zwischen dem Arm 17 und dem Radträger 2 oder zwischen dem Arm 17 und dem oberen Querlenker 3 rein schematisch dargestellt.

## Patentansprüche

1. Doppelquerlenkerachse (1) eines Fahrzeugs mit einem Radträger (2) für ein Rad, welcher mittels eines oberen Querlenkers (3) und eines unteren Querlenkers (4) gelenkig am Fahrzeugaufbau angebunden ist, sowie mit einem den Fahrzeugaufbau gegenüber dem Radträger (2) zumindest anteilig abstützenden Federelement (18) und einem Dämpfer (5) zur Bedämpfung von Ein- und/oder Ausfederbewegungen des Radträgers (3) gegenüber dem Fahrzeugaufbau, wofür der Dämpfer (5) mit einem ersten Bestandteil (9) fahrzeugaufbauseitig und mit einem zweiten Bestandteil (8) radträgerseitig abgestützt ist, und wobei das Federelement (18) ausschließlich über den am Radträger (2) abgestützten Bestandteil (8) des Dämpfers (5) am Radträger (2) abgestützt ist, so dass hinsichtlich der Kraftübertragung zwischen dem Fahrzeugaufbau und dem Radträger (2) eine Reihenschaltung mit zwischengeschaltetem Federelement (18) und dem radträgerseitig abgestützten Dämpfer-Bestandteil (8) gebildet ist, **dadurch gekennzeichnet, dass** das Federelement (18) eine Querblattfeder ist und der Dämpfer (5) eine gabelförmige Verlängerung (10) aufweist, an deren freien Enden das Federelement (18) abgestützt ist

2. Doppelquerlenkerachse nach Anspruch 1, wobei der radträgerseitig abgestützte Bestandteil (8) des Dämpfers (5) direkt oder unter Zwischenschaltung eines weiteren Bauelements indirekt in Fahrzeug-Hochachsrichtung betrachtet an einem oberen Abschnitt des Radträgers (2) abgestützt ist, während die Abstützung des Federelements (18) am radträgerseitig abgestützten Dämpfer-Bestandteil (8) nahe des unteren Querlenkers (4) vorgesehen ist.

3. Doppelquerlenkerachse nach Anspruch 1 oder 2, wobei der radträgerseitig abgestützte Bestandteil (8) des Dämpfers (5) benachbart zum Radträger (2) zumindest geringfügig gelenkig am oberen Querlenker (3) abgestützt ist.

4. Doppelquerlenkerachse nach Anspruch 1 oder 2, wobei der radträgerseitig abgestützte Bestandteil (8) des Dämpfers (5) unter Zwischenschaltung eines eine Lenkbarkeit des Radträgers (2) herstellenden Gelenks mit einem Arm (17) direkt am Radträger (2) und der benachbarte Querlenker (3) am besagten Arm (17) zumindest geringfügig gelenkig abgestützt ist

5. Doppelquerlenkerachse nach einem der vorgehenden Ansprüche, wobei das fahrzeugaufbauseitig abgestützte Bestandteil (9) des obere Endes (11) des Dämpfers (5) mittels eines Stützlagers (13), welches eine geringfügige Verlagerung des Dämpfers (5) sowohl in Fahrzeugquerrichtung (20) als auch in Fahrzeuglängsrichtung ermöglicht, am Fahrzeugaufbau abgestützt ist.

6. Doppelquerlenkerachse nach Anspruch 5, wobei das Stützlager (13) mehrere Gummischichten (14) umfasst, die durch steife Zwischenschichten (15) voneinander getrennt sind, und wobei die Gummischichten (14) und Zwischenschichten (15) mit einer maximalen Abweichung von 20° senkrecht zur Dämpferachse (7) angeordnet sind.

7. Doppelquerlenkerachse nach einem der vorhergehenden Ansprüche, der Abstützpunkt des Federelements (1) am radträgerseitig abgestützten Bestandteil (8) des Dämpfers (5) in Fahrzeug-Hochachsrichtung betrachtet unterhalb der Drehachse (22) des Rades liegt.

## Claims

1. A double-wishbone suspension (1) of a vehicle, with a wheel carrier (2) for a wheel, which is articulatedly connected to the vehicle chassis by means of an upper wishbone arm (3) and a lower wishbone arm (4), and with a spring element (18) at least partly supporting the vehicle chassis relative to the wheel carrier (2), and a damper (5) for damping compressive and/or rebounding movements of the wheel carrier (3) relative to the vehicle chassis, for which purpose a first component (9) of the damper (5) is supported on the vehicle chassis and a second component (8) thereof is supported on the wheel carrier, and wherein the spring element (18) is supported on the wheel carrier (2) exclusively via the component (8) of the damper (5) supported on the wheel carrier (2), such that forces between the vehicle chassis and the wheel carrier (2) are transmitted serially by the intermediate spring element (18) and the damper component (8) supported on the wheel carrier,
**characterised in that** the spring element (18) is a transverse leaf spring and the damper (5) has a fork-shaped extension (10), at the free ends of which the spring element (18) is supported.

2. A double-wishbone suspension according to claim 1, wherein the component (8) of the damper (5) supported on the wheel carrier is supported on an upper portion of the wheel carrier (2) directly or indirectly, with interpositioning of a further element, as considered in the direction of the vertical axis of the vehicle, whereas the support of the spring element (18) on the damper component (8) supported on the wheel carrier is provided in the vicinity of the lower wishbone arm (4).

3. A double-wishbone suspension according to claim 1 or 2, wherein the component (8) of the damper (5) supported on the wheel carrier side is supported at least slightly articulatedly on the upper wishbone arm (3) adjacently to the wheel carrier (2).

4. A double-wishbone suspension according to claim 1 or 2, wherein the component (8) of the damper (5) supported on the wheel carrier side, with interpositioning of a joint making it possible to steer the wheel carrier (2), is supported directly on the wheel carrier (2) by means of an arm (17), and the adjacent wishbone arm (3) is at least slightly articulatedly supported on said arm (17).

5. A double-wishbone suspension according to any one of the preceding claims, wherein the component (9) of the upper end (11) of the damper (5) supported on the vehicle chassis is supported on the vehicle chassis by means of a support bearing (13) which enables a slight displacement of the damper (5) both in the vehicle transverse direction (20) and in the vehicle longitudinal direction.

6. A double-wishbone suspension according to claim 5, wherein the support bearing (13) comprises a plurality of rubber layers (14) which are separated from one another by rigid intermediate layers (15), and wherein the rubber layers (14) and intermediate layers (15) are arranged perpendicularly to the damper axis (7) with a maximum deviation of 20°.

7. A double-wishbone suspension according to any one of the preceding claims, wherein the support point of the spring element (1) on the component (8) of the damper (5) supported on the wheel carrier lies below the axis of rotation (22) of the wheel as considered in the direction of the vertical axis of the vehicle.

## Revendications

1. Essieu à double bras de suspension transversal (1) d'un véhicule comprenant un support (2) d'une roue qui est articulé sur la carrosserie du véhicule au moyen d'un bras de suspension transversal supérieur (3) et d'un bras de suspension transversal inférieur (4), ainsi qu'un élément élastique (18) supportant au moins en partie la carrosserie du véhicule par rapport au support de roue (2) et un amortisseur (5) permettant d'amortir les mouvements élastiques de débattement et/ou de rabattement du support de roue (3) par rapport à la carrosserie du véhicule, l'amortisseur (5) s'appuyant à cet effet par un premier composant (9) côté carrosserie du véhicule et par un second composant (8) côté support de roue, et l'élément élastique (18) s'appuyant exclusivement sur le support de roue (2) par l'intermédiaire du composant (8) de l'amortisseur (5) appuyé sur le support de roues (2) de façon à former la transmission des forces entre la carrosserie du véhicule et le support de roue (2) un montage en série avec interposition de l'élément élastique (18) et du composant d'amortisseur (8) s'appuyant côté support de roues,
**caractérisé en ce que**
l'élément élastique (18) est un ressort à lame transversale et l'amortisseur (5) comporte un prolongement (10) en forme de fourche sur les extrémités libres duquel s'appuie l'élément élastique (18).

2. Essieu à double bras de suspension transversal conforme à la revendication 1,
dans lequel le composant (8) de l'amortisseur (5) s'appuyant côté support de roue (2) s'appuie directement ou indirectement avec interposition d'un autre composant, sur un segment supérieur du support de roue (2) considéré dans la direction de l'axe vertical du véhicule tandis que l'appui de l'élément élastique (18) sur le composant d'amortisseur (8) s'appuyant côté support de roues est prévu à proximité du bras de suspension transversal inférieur (4).

3. Essieu à double bras de suspension transversal conforme à la revendication 1 ou 2,
dans lequel le composant (8) de l'amortisseur (5) s'appuyant côté support de roue s'appuie sur le bras de suspension transversal supérieur (3) en étant articulé au moins dans une faible mesure au voisinage du support de roues (2).

4. Essieu à double bras de suspension transversal conforme à la revendication 1 ou 2,
dans lequel le composant (8) de l'amortisseur (5) s'appuyant côté support de roue s'appuie directement sur le support de roue (2) avec un bras (17) avec interposition d'une articulation permettant d'obtenir une liberté d'articulation de ce support de roue (2) tandis que le bras de suspension transversal voisin (3) s'appuie sur ce bras (17) en étant au moins faiblement articulé.

5. Essieu à double bras de suspension transversal conforme à l'une des revendications précédentes,
dans lequel le composant (9) de l'extrémité supérieure (11) de l'amortisseur (5) s'appuyant côté carrosserie du véhicule s'appuie sur la carrosserie du véhicule au moyen d'un palier de support (13) qui permet un faible déplacement de l'amortisseur (5) aussi bien dans la direction transversale (20) du véhicule qu'également dans la direction longitudinale de ce véhicule.

6. Essieu à double bras de suspension transversal conforme à la revendication 5,
dans lequel le palier de support (13) comporte plusieurs couches de caoutchouc (14) qui sont séparées les unes des autres par des couches intermédiaires rigides (15) et les couches de caoutchouc (14) et les couches intermédiaires (15) sont positionnées perpendiculairement à l'axe (7) de l'amortisseur avec un écart maximum de 20°.

7. Essieu à double bras de suspension transversal conforme à l'une des revendications précédentes,
dans lequel le point d'appui de l'élément élastique (1) sur le composant (8) de l'amortisseur (5) s'appuyant côté support de roue est situé au dessous de l'axe de rotation (22) de la roue dans la direction de l'axe vertical du véhicule.
